# EUROPEAN PATENT APPLICATION

(11) **EP 1 517 495 A1**
(43) Date of publication of application: **23.03.2005**
(21) Application number: 03292291.6
(22) Date of filing: 18.09.2003
(51) Int. Cl.: H04L 12/58

(54) **Email delivery in telecommunications networks**

(71) Applicant: Hewlett-Packard Development Company, L.P., Houston, TX 77070 (US)
(72) Inventor: Wieczorek, Philipe, 38330 Saint Ismier (FR); Stephan, Yann, 38130 Echirolles (FR); Peuziat, Xavier, 38290 Satolas et Bonce (FR); Huve, Fréderic, 38190 Villard Bonnot (FR)
(74) Representative: Lloyd, Richard Graham

(57) **Abstract**

A method of delivering an email message to a remote terminal comprising: parsing the message to identify a header and at least two content items; and dispatching the content items or at least information derived from the header to the remote terminal using at least two different channels for separate content items, at least one of which two different channels is a store and forward channel.

## Description

### Field of the Invention

This invention relates to the delivery of messages, such as email messages, in telecommunications networks.

### Background of the Invention

Electronic messaging techniques, such as e-mail, voicemail and the Short Message Service (SMS) and Multimedia Message Service (MMS) available in GSM telecommunications networks, have in the last decade become very widely used for both interpersonal and interbusiness communication, but in present implementations these different messaging techniques are only integrated one with another to a limited extent.

For instance, systems are known and commonly implemented by mobile telephony operators which enable a user to access email via voice channels. Typically using such systems a user can obtain a text to speech readout of the text contained in an email message. Such text-to-speech portal systems are described for instance in WO99/65256 and WO01/59998 (ETRIEVE INC). Email can also be accessed from a cellular phone via various types of data channels, such as WAP or i-mode, through WML-based WAP gateways, for instance, in the case of WAP.

However, a difficulty with the use of voice channels to access e-mail is the handling of non-text and non-audio attachments.

### Summary of the Invention

In brief, this invention is directed to a method of delivering an email message, in for instance standard Internet MIME format, to a remote terminal comprising parsing the message to identify a header and at least two content items; and dispatching the content items, or at least one of said content items and at least information derived from the header, to the remote terminal using at least two different channels for separate content items or for the content item and the information derived from the header, at least one of which two different channels is a store and forward channel.

The message parts can include a message text and one or more attachments and the message text can be delivered via a voice channel. The header information, which may include for instance the name or email address of the sender, can be transmitted in any suitable manner, such as by SMS or together with the message text.

In at least preferred embodiments, at least one of the message parts comprises a file and the method comprises converting at least one identified file into one or more separately displayable image files which are dispatched to a client using the store and forward channel.

The step of dispatching the image files can, for instance, comprise sending one or more MMS messages to the remote terminal, via an MMS service centre.

It will be understood that the invention has been devised primarily for the situation where the remote terminal is a telephone handset, particularly a wireless telephone handset such as a GSM or similar cellular telephone. Application to other similar or comparable situations or to a suitable configured fixed handset is, however, not excluded.

In at least some embodiments, the user of the remote terminal can be presented with a option to receive the message parts or file attachments after having been presented with the message text.

The method is carried out, for instance by a voice portal application, that is arranged to retrieve the email message from a server using a standard Internet email access protocol, such as POP or IMAP.

In this way, the invention can be used to provide a simple, easily understood and easily used way of accessing a relatively common form of email message, that is a simple text messagethat can relatively easily be delivered using text to speech readout, or disregarded, followed by content that is, or can be transformed into, a series of images, such as a set of photographs for instance. As such, the method may conveniently be invoked by substantially a single option presented to the user at the remote terminal for selection or selected by the user through configuration of a user profile. This option may be suitably named to enable ready recognition of the functionality by the user.

In another of its aspects, the invention provides apparatus for delivering an email message to a remote terminal comprising a parser for parsing the message to identify a header and at least two content items; and functionality for dispatching the content items or at least one of said content items and at least information derived from the header to the remote terminal using at least two different channels for separate content items or for the content item and the information derived from the header, at least one of which two different channels is a store and forward channel. In preferred embodiments, the dispatch functionality comprises an MMS user agent for sending one or more MMS messages to an MMS service centre.

The dispatch functionality can comprise text to speech functionality and be arranged to deliver at least one content item extracted from the message and containing text via a voice channel, for instance.

In preferred embodiments, the apparatus comprises at least one converter for converting content items extracted from messages of at least one identified file type into one or more separately displayable image files, the dispatch functionality being arranged to dispatch the image files to the remote terminal using the store and forward channel.

The apparatus can be realised in the form of computer program code elements arranged to perform the above described methods in conjunction with conventional computer and interactive media platform hardware and software.

### Brief Description of the Drawings

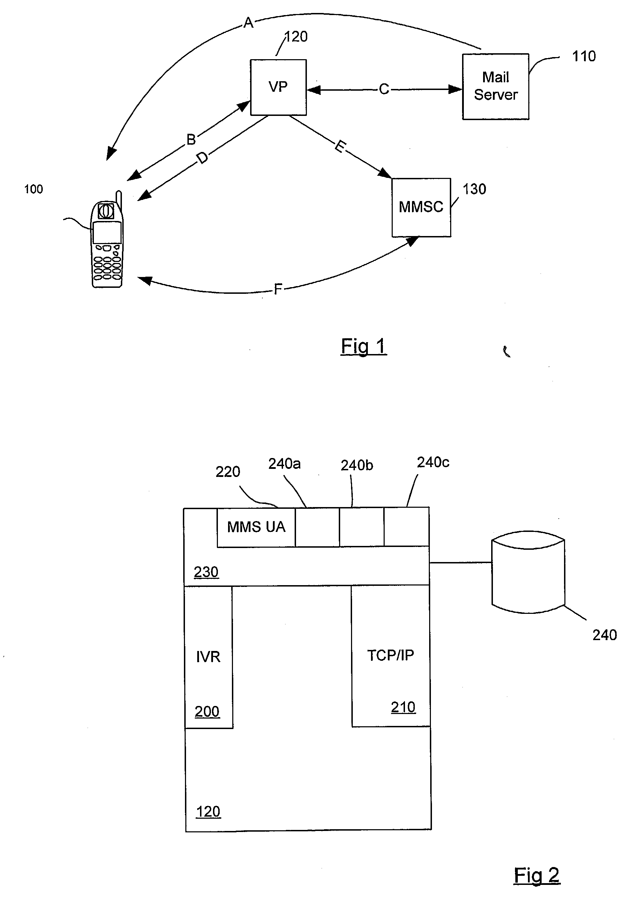

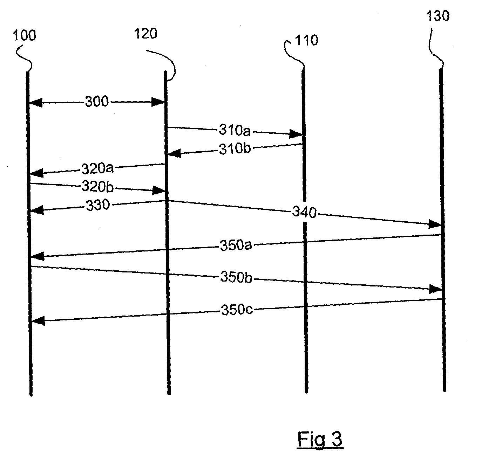

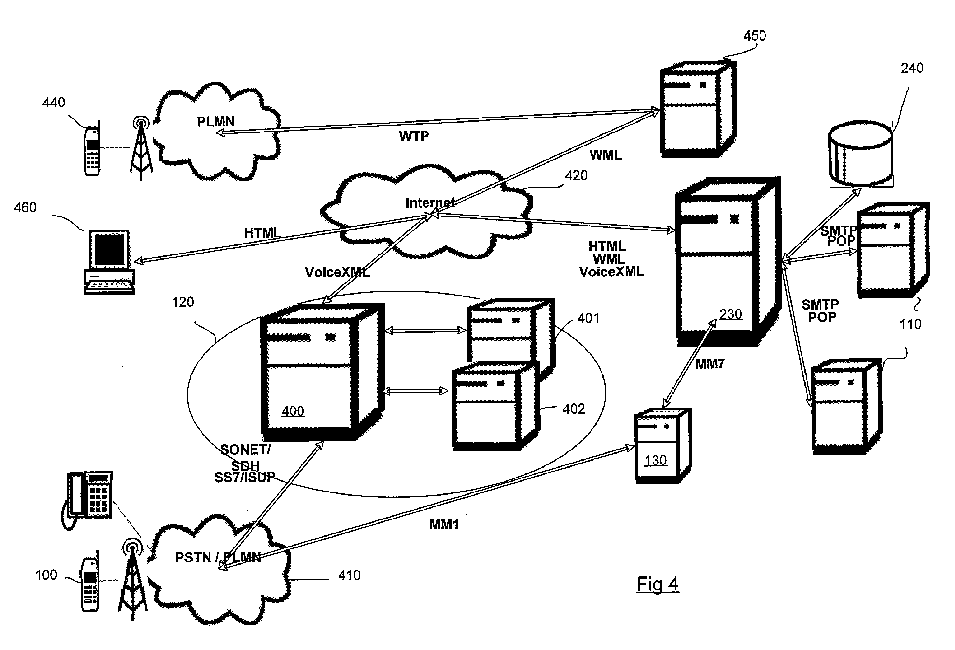

A voice portal system application embodying the invention will now be described, by way of non-limiting example, with reference to the accompanying diagrammatic drawings, in which:
. Figure 1 is a schematic diagram showing a communication system in which emails can be delivered to a wireless handset;
. Figure 2 is a schematic diagram illustrating the components of a voice portal;
. Figure 3 is a diagram illustrating a series of protocols between a handset, a voice portal, an mail server and an MMSC;
. **Figure 4** is a schematic diagram showing a unified messaging system in which emails can be delivered to a wireless handset.

### Best Mode of Carrying Out the Invention

Fig 1 shows a system in which the user of a mobile telephone 100 can be used to access email that is stored on an mail server 110 via a voice portal 120. In the system shown in Fig 1, an email message is retrieved from mail server 110 by the voice portal 120 and parsed within voice portal 120 to identify a header and at least two content items, such as a message text and one or more attachments. The content items are sent, in the manner to be described in more detail below, to the mobile telephone handset 100 using at least two different channels, such as the voice channel established with the mobile telephone and which is illustrated in Fig 1 by the arrow D, and the MMS system via MMS service centre 130 which is a store and forward channel and is illustrated by arrows E and F.

The relevant components of voice portal 120 are shown in more detail in Fig 2. Voice portal 120 includes interactive voice response (IVR) functionality shown generally at 200 for enabling the voice portal to act as the end point of a telephone call and receive and supply voice signals to mobile telephone 100 in a known manner. TCP/IP networking functionality 210 enables voice portal 120 to be connected to an IP network such as the Internet or a corporate intranet, again in known manner.

Also comprised in voice portal 120 is MMS user agent functionality 220 and an application layer 230. Application layer 230 includes one or more adapter units, of which 3 are illustrated as 240a, 240b and 240c. In addition, the voice portal may include or have access to a database 240 which holds user profile and other data. Database 240 may be private to the voice portal or may be another database in use in the system, such as a Home Location Register for instance, to which the voice portal 120 has access.

The general structure of the protocols that determine the interactions between handset 100, mail server 110, voice portal 120 and MMSC 130 are shown in Fig 3 and will now be described with reference to Fig 3 and Fig 1.

Initially, the user may be alerted to the existence of unread email on mail server 110. This may be carried out by any suitable technique such as the sending of a SMS message and is illustrated by arrow A in Fig 1.

The user, via handset 100, interacts with voice portal 120 via a suitable IVR dialog and navigates to the point where they are able to select an option to read an email. This initial dialogue is represented by arrow 300 in Fig 3 and arrow B in Fig 1. It will be appreciated that this dialogue may take many different forms and may involve menus being presented to the user and the user being able to make selection via for instance voice input or the input of DTMF signals or be controlled by reference to a user profile stored in and retrieved from database 240. The dialogue may form part of a larger interaction with the voice portal. The details of this IVR interface are not otherwise relevant to the present invention and need not be further described herein.

Once a user has indicated that they wish to read an email, voice portal interacts with mail server 110 to retrieve at least one email as illustrated by arrows 310a and 310bin Fig 3 and arrow C in Fig 1. This would normally be carried out using one of the standard open email retrieval protocols such as POP or IMAP the details of which are well known and documented. Whilst this retrieval step is illustrated for clarity as taking place following dialogue 300, it will be appreciated that this retrieval step may be carried out at any stage in advance of the email actually being delivered to the user and may involve the selective retrieval of a single message or the collective retrieval of any number of emails in a mailbox either in response to a specific command entered by the user, or automatically upon access to the voice portal. Many configurations are possible.

Internet e-mail is described in RFC822: "Standard for the Format of ARPA Internet Text Messages". Internet e-mail messages include header elements and text. Further content items can be included in messages using the Multipart Internet Mail Extension MIME, RFC2045: "Multipurpose Internet Mail Extensions (MIME) Part One: Format of Internet Message Bodies"; RFC2046: "Multipurpose Internet Mail Extensions (MIME) Part Two: Media Types"; and RFC2047: "MIME (Multipurpose Internet Mail Extensions) Part Three: Message Header Extensions for Non-ASCII Text".

The retrieved email message to be delivered is parsed within voice portal 120 to identify the header and its content items. It will be appreciated that the parsingand analysis of email messages to identify and extract their headers and content items is in itself well-known and need not be described herein. This processing may be carried out between steps 3 10b and 320a and before steps 330 and 340 shown in Fig 3.

In step 320a, the user is presented with initial information regarding the email. This information may include information contained in the email header, such as the name and/or email address of the sender of the email, the number an type of attachments contained with it, the time and/or date of receipt and the subject of the message or the like as desired. Other parts of the email header, such as the message ID or the addressee information for instance, may only delivered to the user if explicitly required by the user. This header information may be delivered to the user in any suitable way, for instance via an SMS message or text to speech conversion. The content of a message text may also in some embodiments or configurations be automatically delivered at this point in the form of a text to speech readout although this is not essential and may not be required by the user. Once the user has been able to understand the number and type of the content items within the email, the user is prompted to indicate whether they wish to receive any attachments within the email. The transmission of this information is indicated generally with arrow 320b.

Once voice portal 120 has available sufficient information to determine how the user wishes to have the email delivered, it can proceed to actual delivery of the email. Certain content items such as a message text and/or any audio file attachments may be delivered directly to the user via the voice channel through which the dialogue with voice portal 120 is being conducted as illustrated by arrow D in Fig 1. Certain other types of content items, such as image files, in eg standard JPEG or GIF data format, may be sent as MMS messages, generated by MMS user agent functionality 220, via MMS service centre 130, as illustrated by arrow 340 in Fig 3 and arrow E in Fig 1.

The details and transmission of MMS messages over 2G and so-called 2.5G telecommunications networks as such is well known and will not be described in detail herein except to state that the MMS scheme provides a store and forward message channel which enables any type of data to be sent to a mobile GSM handset. Unlike the Short Message Service (SMS), MMS messages are not restricted to containing text only or in size. Rather, it is possible to embed any type of content in a message. This includes, for example, audio and video material and still images. Details of the service can be found in3GPP TS 22.140 version 3.1.0 Release 99 (Multimedia Messaging Service (MMS); Stage 1) and 3GPP TS 23.140 (Multimedia Messaging Service (MMS); Functional description; Stage 2) version 3.10 Release 99.

Where the content item is not initially a single image, or whatever other type can be readily handled by handset 100, an appropriate converter may be provided for transforming the content item into one or more image files. A number of different such converters may be provided in voice portal 130 one for each file type the portal is capable of handling. For example, a converter may be provided that can transform a Microsoft Powerpoint ™ file into a series of images, one for each slide. Similarly a word processed document such as a Microsoft Word™ or Adobe Acrobat ™ file may be presented as a series of images representing a series of printed pages. In the latter case, the user may usefully be presented with the option, in the dialogue represented by arrows 320a and 320b, as to whether the document be delivered as a series of images via MMS or as a Text to Speech readout via the voice channel.

It will be appreciated that a simple text message followed by either a series of images, such as a set of photographs or a Microsoft Powerpoint ™ type presentation file represents an extremely common form of email message and therefore it is considered that arelatively large proportion of email messages may in practice be delivered in the manner described herein using a relatively small number of converters and using a relatively simple dialogue or set of configuration options to set up the delivery mode. Moreover, it will be appreciated that voice portal 120 may be designed to be modular so that new converters may be developed and installed relatively easily, either by the developer of the portal itself, by the provider of the application program that generates the file format concerned, or by third parties according to circumstances. Three such converters or adapter units are illustrated in Fig 2 as 240a, 240b and 240c for the purposes of example only. As such, the delivery via MMS may conveniently be invoked using a single menu option presented to the user at the remote terminal for selection or selected by the user by configuration of a user profile or by default. This option may be suitably namedor labelled to enable ready recognition of the functionality by the user.

The converter itself may conduct or use information provided by a dialogue with the user or user profile to enable, for instance, slides to be selected for delivery from a presentation or pages to be selected from a document.

Once the images have been dispatched as MMS messages and received at MMS service centre 130, MMS service centre alerts the user to the presence of the messages in conventional manner and the user may retrieve them at their convenience. These interactions, which are conventional MMS interactions between the handset 100 and MMS service centre 130, are illustrated in Fig 3 by arrows 350a, 350b, and 350c. It will be noted that the final delivery of the email attachments to handset 100 (arrows 350) is therefore not necessarily contemporaneous with the call the user has placed with voice portal 120. In other words, once the user has indicated to the portal 120 that they would like the attachments delivered by MMS, they may end the call with portal 120 and view the attachments at a later time.

It will be appreciated that Figs 1 and 2 illustrate in schematic form only, a simple embodiment of the invention. The integration of the elements described in the context of a Unified Messaging Architecture will now be described with reference to Fig 4. Fig 4 shows voice portal 120 implemented in the form of an interactive media platform 400 together with its related subsystems such as TTS engine 401 and ASR engine 402. Media platform 400 is connected to a PSTN and/or PLMN 410 via SONET or SDH voice trunks and SS7/ISUP signalling lines. Media platform 400 may be, for instance, one of the Hewlett-Packard Opencall™ Media Platform products. Interactive media platform 400 acts as a VXML gateway to the Internet 420 through which it interacts with an application server 230. Application server 230 implements the POP interactions with external and internal mail servers 110 and database 240, as well as the MMS user agent functionality that interacts with MMSC 130. Also illustrated in Fig 4 is a WAP browser-enabled handset 440 that may access the Internet via WAP gateway 450 and a conventional web browser that can access mail servers 110 via the HTTP or WTP protocols through application server 230. A user of handset 440 may thus possibly have a choice as to whether to access their email via voice portal 120 or via WAP gateway 450 depending on the services which the operator of the system may offer or to which the user may subscribe.

In summary, this embodiment provides a method of delivering an email message comprising parsing the message to identify one or more files therein; converting at least one of said identified files into one or more separately displayable image files and dispatching the image files to a user by sending one or more MMS messages to an MMS service centre.

Although a specific embodiment of the invention has been described, the invention is not to be limited to the specific arrangement so described. The invention is limited only by the claims. The claims themselves are intended to indicate the periphery of the claimed invention and are intended to be interpreted as broadly as the language itself allows, rather than being interpreted as claiming only the exemplary embodiment disclosed by the specification.

## Claims

1. A method of delivering an email message to a remote terminal comprising: parsing the message to identify a header and at least two content items; and dispatching the content items, or at least one of said content items and at least information derived from the header, to the remote terminal using at least two different channels for separate content items or for the content item and the information derived from the header, at least one of which two different channels is a store and forward channel.

2. A method as claimed in claim 1 wherein the content items include at least a message text and one or more attachments and the message text is delivered via a voice channel.

3. A method as claimed in claim 1 or claim 2 wherein at least one of the content items comprises a file, the method comprising converting at least one identified file into one or more separately displayable image files and dispatching the image files separately using the store and forward channel.

4. A method as claimed in any preceding claim wherein the step of dispatching the content items via the store and forward channel comprises sending one or more MMS messages to the remote terminal via an MMS service centre.

5. A method as claimed in any preceding claim comprising presenting the user of the remote terminal with a option to receive the content items from the message via the store and forward channel after delivery of at least one content item via another channel.

6. A method as claimed in any preceding claim wherein the remote terminal is a telephone handset.

7. A method as claimed in claim 5 wherein the remote terminal is a wireless telephone handset.

8. A method as claimed in any preceding claim wherein the email message is in standard Internet format, the method comprising retrieving the email message from a server using a standard Internet email access protocol, such as POP or IMAP.

9. A method as claimed in any preceding claim wherein the method is carried out by a voice portal application.

10. A method as claimed in any preceding claim dispatching at least some information derived from the header to the remote terminal using SMS or MMS.

11. A method as claimed in any preceding claim invoked by selection of substantially a single user option.

12. Apparatus for delivering an email message to a remote terminal comprising a parser for parsing the message to identify a header and at least two content items; and functionality for dispatching the content items or at least one of said content items and at least information derived from the header to the remote terminal using at least two different channels for separate content items or for the content item and the information derived from the header, at least one of which two different channels is a store and forward channel.

13. Apparatus as claimed in claim 12 wherein the dispatch functionality comprises text to speech functionality, the apparatus being arranged to deliver via a voice channel at least one content item extracted from the message and containing text.

14. Apparatus as claimed in claim 12 or claim 13 comprising at least one converter for converting content items extracted from messages of at least one identified file type into one or more separately displayable image files, the dispatch functionality being arranged to dispatch the image files to the remote terminal using the store and forward channel.

15. Apparatus as claimed in any of claims 12 to 14 wherein the dispatch functionality comprises an MMS user agent for sending one or more MMS messages to the remote terminal via an MMS service centre.

16. Apparatus as claimed in any of claims 12 to 15 comprising an interface at least for enabling a user of the remote terminal to select a option to receive content items extracted from the message via a store and forward channel after having presented the user with text extracted from another content item extracted from the message.

17. Apparatus as claimed in any of claims 12 to 16 wherein the parser is arranged to analyse email messages in standard Internet format, the apparatus comprising client functionality for retrieving the email message from a server using a standard Internet email access protocol, such as POP or IMAP.

18. Apparatus as claimed in any of claims 12 to 17 including means to invoke the dispatch functionality as substantially a single user option.

19. Apparatus as claimed in any of claims 12 to 18 in the form of a voice portal.

20. A computer program product comprising program code elements arranged to perform a method as claimed in any of claims 1 to 11.
